# DEMANDE DE BREVET EUROPEEN

(11) **EP 2 725 646 A1**
(43) Date de publication de la demande: **30.04.2014**
(21) Numéro de dépôt: 13187298.8
(22) Date de dépôt: 04.10.2013
(51) Int. Cl.: H01M 8/02, H01M 8/04, H01M 8/24, H01M 8/10

(54) **Plaque de pile à combustible et empilement de cellules comprenant une telle plaque**

(30) Priorité: 25.10.2012 FR 1260189
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: Cerceau, Arnaud, 38850 CHARAVINES (FR); Gastaldin, Daniel, 38330 SAINT NAZAIRE LES EYMES (FR); Jannin, Nicolas, 38120 SASSENAGE (FR); Marteau, Julien, 38000 GRENOBLE (FR); Paris, Marion, 38000 GRENOBLE (FR); Rossinot, Elisabeth, 38112 MEAUDRE (FR); Trouve, Hélène, 38360 SASSENAGE (FR)
(74) Mandataire: De Cuenca, Emmanuel Jaime

(57) **Abrégé**

Plaque de pile à combustible, la face réactive de la plaque (1) étant munie de reliefs et creux formant au moins un canal (2) de circulation pour un réactif, le au moins un canal (2) de circulation pour un réactif ayant une entrée communiquant avec un orifice (12) de distribution de réactif formé au travers de la plaque (1), la plaque (1) comprenant en outre un orifice collecteur (3) d'entrée de réactif qui est distinct de l'orifice (12) de distribution de réactif, l'orifice collecteur (3) d'entrée de réactif étant prévu pour alimenter en réactif l'entrée du au moins un canal (2) via un passage mettant en relation fluidique l'orifice collecteur (3) d'entrée et l'orifice (12) de distribution de réactif, l'orifice collecteur (3) d'entrée s'étendant longitudinalement dans le plan de la plaque (1) selon une première direction (13) longitudinale entre une première extrémité (31) inférieure et une seconde extrémité (30) supérieure, l'orifice (12) de distribution s'étendant longitudinalement dans le plan de la plaque (1) selon une seconde direction (22) longitudinale entre une première extrémité (21) inférieure et une seconde extrémité (20) supérieure, les première (13) et seconde (22) directions longitudinales étant parallèles entre elles et verticales lorsque la plaque (1) est en en position d'utilisation verticale, caractérisée en ce que, en position verticale d'utilisation de la plaque, la première extrémité (31) inférieure de l'orifice collecteur (3) d'entrée est située en dessous de la première extrémité (21) inférieure de l'orifice (12) de distribution.

## Description

La présente invention concerne une plaque de pile à combustible ainsi qu'en empilement de cellules comprenant une telle plaque.

L'invention concerne plus particulièrement une plaque de pile à combustible du type à membrane échangeuse de protons, la plaque étant destinée à coopérer avec une autre plaque de pile pour prendre en sandwich un Assemblage Membrane Electrodes, en position d'utilisation la plaque est disposée dans un plan vertical, la plaque comprenant deux faces opposées respectivement une face réactive et une face de refroidissement, la face réactive de la plaque étant munie de reliefs et creux formant au moins un canal de circulation pour un réactif, le au moins un canal de circulation pour un réactif ayant une entrée communiquant avec un orifice de distribution de réactif formé au travers de la plaque, la plaque comprenant en outre un orifice collecteur d'entrée de réactif qui est distinct de l'orifice de distribution de réactif, l'orifice collecteur d'entrée de réactif étant prévu pour alimenter en réactif l'entrée du au moins un canal via un passage mettant en relation fluidique l'orifice collecteur d'entrée et l'orifice de distribution de réactif, l'orifice collecteur d'entrée s'étendant longitudinalement dans le plan de la plaque selon une première direction longitudinale entre une première extrémité inférieure et une seconde extrémité supérieure, l'orifice de distribution s'étendant longitudinalement dans le plan de la plaque selon une seconde direction longitudinale entre une première extrémité inférieure et une seconde extrémité supérieure, les première et seconde directions longitudinales étant parallèles entre elles et verticales lorsque la plaque est en en position d'utilisation verticale.

Un empilement (« stack » en anglais) de cellules élémentaires de pile à combustible est un assemblage de plusieurs cellules électrochimiques. Classiquement, chaque cellule est constituée de deux plaques (notamment bipolaires), un Assemblage Membrane Electrode, des joints de plaque et un système permettant l'arrivée et la sortie des fluides dans la cellule.

Selon une configuration connue, les cellules et donc les plaques sont orientées verticalement, c'est-à-dire que le plan des plaques est vertical. Dans les architectures connues, en fonction des conditions d'utilisation des cellules, il peut se produire des problèmes au niveau de la gestion de l'eau dans la pile (par exemple Assemblage Membrane Electrodes noyé d'eau, surplus d'eau dans les canaux de réactifs, mauvaise alimentation en air...).

Un but de la présente invention est de pallier tout ou partie des inconvénients de l'art antérieur relevés ci-dessus.

A cette fin, la plaque selon l'invention, par ailleurs conforme à la définition générique qu'en donne le préambule ci-dessus, est essentiellement **caractérisé en ce que**, en position verticale d'utilisation de la plaque, la première extrémité inférieure de l'orifice collecteur d'entrée est située en dessous de la première extrémité inférieure de l'orifice de distribution.

Par ailleurs, des modes de réalisation de l'invention peuvent comporter l'une ou plusieurs des caractéristiques suivantes :
- en position verticale d'utilisation de la plaque, la première extrémité inférieure de l'orifice collecteur d'entrée est située en dessous de la première extrémité inférieure de l'orifice de distribution à une distance D comprise entre 0,5mm et 50 mm,
- l'orifice collecteur d'entrée et l'orifice de distribution sont adjacents et ont des formes générales oblongues parallèles,
- la plaque comporte un joint d'étanchéité périphérique disposé sur la face réactive et comprenant une portion formant un boucle autour de l'orifice collecteur d'entrée,
- le au moins un canal de circulation comporte une sortie avec un orifice d'évacuation de réactif formé au travers de la plaque, la plaque comprenant en outre un orifice collecteur de sortie de réactif qui est distinct de l'orifice d'évacuation, l'orifice collecteur de sortie étant prévu pour récupérer le réactif à la sortie du au moins un canal via un passage mettant en relation fluidique l'orifice collecteur de sortie et l'orifice d'évacuation, l'orifice collecteur de sortie s'étendant longitudinalement selon une troisième direction dans le plan de la plaque entre une première extrémité inférieure et une seconde extrémité supérieure, l'orifice d'évacuation s'étendant longitudinalement dans le plan de la plaque selon une quatrième direction longitudinale entre une première extrémité inférieure et une seconde extrémité supérieure, les troisième et quatrième directions longitudinales étant parallèles entre elles et verticales lorsque la plaque est en en position d'utilisation verticale, et en ce que en position verticale d'utilisation de la plaque, la première extrémité inférieure de l'orifice collecteur de sortie est située en dessous de la première extrémité inférieure de l'orifice d'évacuation,
- en position verticale d'utilisation de la plaque, une proportion comprise un tiers et deux tiers de l'orifice collecteur de sortie est située en dessous de l'orifice d'évacuation.

L'invention peut concerner également un empilement de cellules de pile à combustible dans lequel les cellules sont munies de plaques selon l'une quelconque des caractéristiques ci-dessus ou ci-après.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente de face, de façon schématique et partielle, la face réactive d'une plaque de pile à combustible illustrant un premier détail d'un exemple de réalisation possible de l'invention,
- la figure 2 représente de face, de façon schématique et partielle, la face réactive d'une plaque de pile à combustible illustrant un second détail d'un exemple de réalisation possible de l'invention,
- la figure 3 représente une vue en perspective, schématique et partielle, illustrant un empilement de plaques formant des cellules d'une pile à combustible.

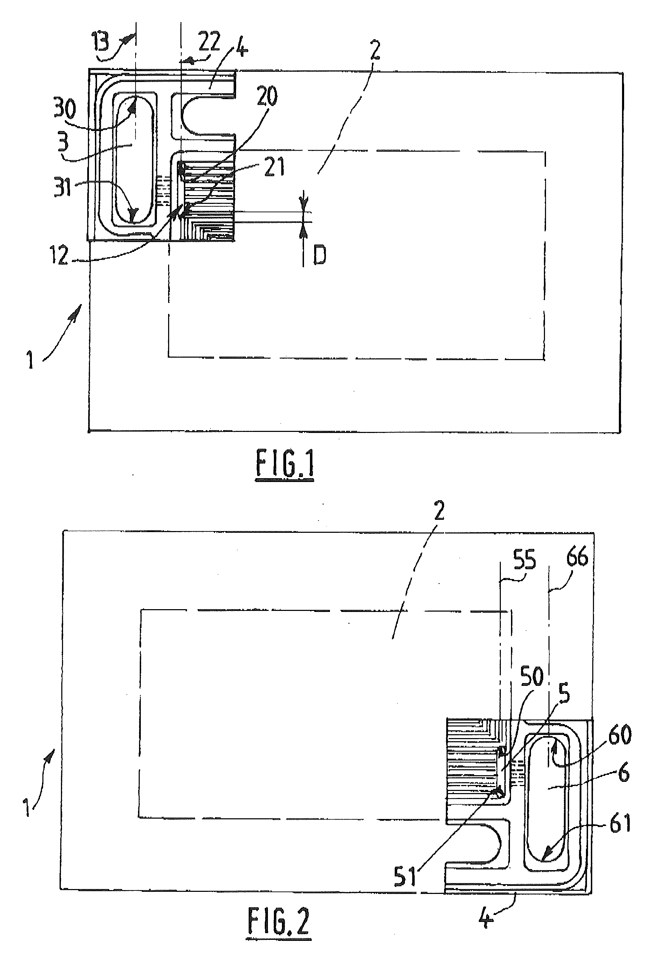

Comme illustré à la figure 1, la plaque de pile à combustible comprend deux faces opposées respectivement une face réactive et une face de refroidissement.

La figure 1 représente schématiquement et partiellement la face réactive qui est munie de reliefs et creux formant au moins un canal 2 de circulation pour un réactif.

Le au moins un canal 2 de circulation pour un réactif possède une entrée communiquant avec un orifice 12 de distribution de réactif formé au travers de la plaque 1. La plaque 1 comprend en outre un orifice collecteur 3 d'entrée de réactif qui est distinct de l'orifice 12 de distribution de réactif. L'orifice collecteur 3 d'entrée de réactif est prévu pour alimenter en réactif l'entrée du au moins un canal 2 via un passage formé sur la face de refroidissement de la plaque 1 mettant en relation fluidique l'orifice collecteur 3 d'entrée et l'orifice 12 de distribution de réactif. Ce passage est schématisé par des pointillés et peut être formé par un creux formé dans l'épaisseur de la plaque au niveau de la séparation entre les deux orifices 3, 12.

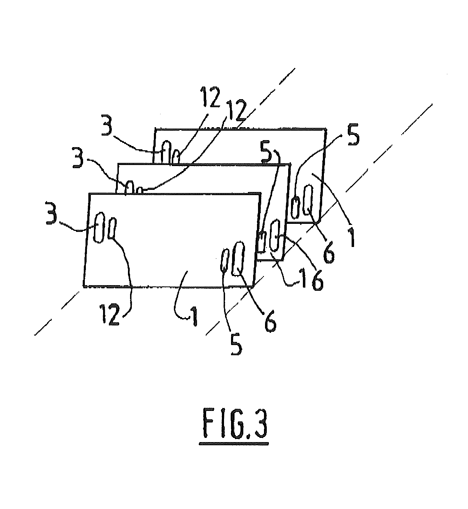

L'orifice collecteur 3 d'entrée s'étend longitudinalement dans le plan de la plaque 1 selon une première direction 13 longitudinale entre une première extrémité 31 inférieure et une seconde extrémité 30 supérieure. L'orifice 12 de distribution s'étend longitudinalement dans le plan de la plaque 1 selon une seconde direction 22 longitudinale entre une première extrémité 21 inférieure et une seconde extrémité 20 supérieure. Les première 13 et seconde 22 directions longitudinales sont parallèles entre elles et verticales lorsque la plaque 1 est en position d'utilisation verticale (cf. figure 3). En position verticale d'utilisation de la plaque, la première extrémité 31 inférieure de l'orifice collecteur 3 d'entrée est située en dessous de la première extrémité 21 inférieure de l'orifice 12 de distribution.

Comme visible à la figure 1, en position verticale d'utilisation, l'orifice 3 collecteur d'entrée des gaz réactifs est majoritairement positionné au dessus de l'orifice 12 de distribution, sauf pour son extrémité 31 inférieure.

De cette façon, il ne peut y avoir de réserve d'eau importante dans les collecteurs 3 et orifice de distribution 12 d'un empilement de pile. Ceci permet d'éviter un problème de gestion d'eau dans la pile, notamment lors des démarrages, changements de régime ou purges (coup de bélier).

Ce retrait vers le bas du collecteur 3 par rapport à l'orifice 12 de distribution présente également un avantage pour les démarrages de la pile à température négative. En effet, après un stockage prolongé à basse température ou à température négative, l'eau de condensation va potentiellement stagner ou geler en point bas sur le collecteur 3 sans obstruer l'arrivée des gaz au niveau de l'orifice 12 de distribution situé plus haut.

La figure 2 illustre l'agencement du collecteur 6 de sortie par rapport à l'orifice d'évacuation qui reçoit le gaz réactif en sortie du canal 2.

L'agencement du collecteur 6 de sortie par rapport à l'orifice 5 d'évacuation est de préférence symétriquement identique à ce qui précède par rapport au centre de la plaque 1 (extrémité inférieure de l'orifice 6 collecteur située en dessous de l'extrémité inférieure de l'orifice 5 d'évacuation). C'est-à-dire que les agencements des orifices 5 d'évacuation et du collecteur 6 de sortie sont systématiquement identiques aux agencements respectivement aux orifices 12 de distribution et collecteurs 3 d'entrée. C'est-à-dire que les collecteurs 5, 6 sont identiques et disposés symétriquement par rapport au centre de la plaque 1. De même, les orifices de distribution 12 et d'évacuation 5 sont identiques et disposés symétriquement par rapport au centre de la plaque 1. La plaque est ainsi symétrique au niveau de ses entrées et sorties. C'est-à-dire que la plaque n'a pas de côtés haut et bas distincts et peut être montée sans nécessiter de détrompeur pour disposer l'entrée en haut et la sortie en bas ou inversement. Ceci facilite le montage de la pile.

De plus, la symétrie (mêmes dimensions) des collecteurs 3, 6 et orifices 12, 5 entre l'entrée et la sortie confère à la plaque un bon compromis de fonctionnement entre d'une part, la nécessité de limiter la taille des orifices et collecteurs de sortie (pour forcer la vitesse d'écoulement) et d'autre part, la nécessité d'augmenter cette taille (pour évacuer de grandes quantités d'eau) et la nécessité de disposer d'entrée (collecteur 3, orifice 12) de taille suffisante.

Le fonctionnement de la pile est amélioré notamment en ce qui concerne les évacuations d'eau.

L'orifice 5 d'évacuation est par exemple majoritairement positionné au-dessus du collecteur 6 de sortie. Ceci également évite une accumulation d'eau dans les canaux gaz et évite des « retours d'eau » du collecteur 6 de sortie vers l'orifice 5 d'évacuation.

Ces structures permettent ainsi une meilleur gestion de l'eau au niveau des entrée et sorties fluidiques (collecteurs 3, 6, orifices 12, 5), notamment aux basses températures.

Ceci permet d'amélioration de la performance et durée de vie de la cellule, de l'empilement de cellules et de la pile correspondants.

## Revendications

1. Plaque de pile à combustible du type à membrane échangeuse de protons, la plaque (1) étant destinée à coopérer avec une autre plaque de pile pour prendre en sandwich un Assemblage Membrane Electrodes, en position d'utilisation la plaque (1) est disposée dans un plan vertical, la plaque (1) comprenant deux faces opposées respectivement une face réactive et une face de refroidissement, la face réactive de la plaque (1) étant munie de reliefs et creux formant au moins un canal (2) de circulation pour un réactif, le au moins un canal (2) de circulation pour un réactif ayant une entrée communiquant avec un orifice (12) de distribution de réactif formé au travers de la plaque (1), la plaque (1) comprenant en outre un orifice collecteur (3) d'entrée de réactif qui est distinct de l'orifice (12) de distribution de réactif, l'orifice collecteur (3) d'entrée de réactif étant prévu pour alimenter en réactif l'entrée du au moins un canal (2) via un passage mettant en relation fluidique l'orifice collecteur (3) d'entrée et l'orifice (12) de distribution de réactif, l'orifice collecteur (3) d'entrée s'étendant longitudinalement dans le plan de la plaque (1) selon une première direction (13) longitudinale entre une première extrémité (31) inférieure et une seconde extrémité (30) supérieure, l'orifice (12) de distribution s'étendant longitudinalement dans le plan de la plaque (1) selon une seconde direction (22) longitudinale entre une première extrémité (21) inférieure et une seconde extrémité (20) supérieure, les première (13) et seconde (22) directions longitudinales étant parallèles entre elles et verticales lorsque la plaque (1) est en en position d'utilisation verticale, en position verticale d'utilisation de la plaque, la première extrémité (31) inférieure de l'orifice collecteur (3) d'entrée étant située en dessous de la première extrémité (21) inférieure de l'orifice (12) de distribution, **caractérisé en ce que** le au moins un canal (2) de circulation comporte une sortie avec un orifice (5) d'évacuation de réactif formé au travers de la plaque (1), la plaque (1) comprenant en outre un orifice collecteur (6) de sortie de réactif qui est distinct de l'orifice (5) d'évacuation, l'orifice collecteur (6) de sortie étant prévu pour récupérer le réactif à la sortie du au moins un canal (2) via un passage mettant en relation fluidique l'orifice collecteur (6) de sortie et l'orifice (5) d'évacuation, l'orifice collecteur (6) de sortie s'étendant longitudinalement selon une troisième direction (66) dans le plan de la plaque (1) entre une première extrémité (61) inférieure et une seconde extrémité (60) supérieure, l'orifice (5) d'évacuation s'étendant longitudinalement dans le plan de la plaque (1) selon une quatrième direction (55) longitudinale entre une première extrémité (51) inférieure et une seconde extrémité (50) supérieure, les troisième (66) et quatrième (55) directions longitudinales étant parallèles entre elles et verticales lorsque la plaque (1) est en en position d'utilisation verticale, en position verticale d'utilisation de la plaque (1), la première extrémité (61) inférieure de l'orifice collecteur (6) de sortie étant située en dessous de la première extrémité (51) inférieure de l'orifice (5) d'évacuation, et **en ce que** les agencements des collecteurs (6) de sortie et de l'orifice (5) d'évacuation sont symétriquement identiques respectivement au collecteur (3) d'entrée et à l'orifice (12) de distribution par rapport au centre de la plaque (1).

2. Plaque selon la revendication 1, **caractérisée en ce que**, en position verticale d'utilisation de la plaque, la première extrémité (31) inférieure de l'orifice collecteur (3) d'entrée est située en dessous de la première extrémité (21) inférieure de l'orifice (2) de distribution à une distance D comprise entre 0,5mm et 50 mm.

3. Plaque selon la revendication 1 ou 2, **caractérisée en ce que** l'orifice collecteur (3) d'entrée et l'orifice (2) de distribution sont adjacents et ont des formes générales oblongues parallèles.

4. Plaque selon l'une quelconque des revendications 1 à 3, **caractérisée en ce que** la plaque (1) comporte un joint d'étanchéité (4) périphérique disposé sur la face réactive et comprenant une portion formant un boucle autour de l'orifice collecteur (3) d'entrée.

5. Plaque selon la revendication 1 à 4, **caractérisée en ce que**, en position verticale d'utilisation de la plaque (1), une proportion comprise entre un tiers et deux tiers de l'orifice collecteur (6) de sortie est située en dessous de l'orifice (5) d'évacuation.

6. Empilement de cellules de pile à combustible dans lequel les cellules sont munies de plaques (1) selon l'une quelconque des revendications 1 à 5.
